# EUROPEAN PATENT SPECIFICATION

(11) **EP 4 217 419 B1**
(45) Date of publication and mention of the grant of the patent: **27.03.2024**
(21) Application number: 22839258.5
(22) Date of filing: 15.12.2022
(51) Int. Cl.: C08K 11/00, C08K 3/04, C08K 3/26, C08L 23/16, C08L 23/12, C08L 27/06

(54) **A METHOD FOR THE PRODUCTION OF A RUBBER COMPOSITION**
METHODE ZUR HERSTELLUNG EINER KAUTSCHUKZUSAMMENSETZUNG
MÉTHODE DE PRODUCTION D'UNE COMPOSITION DE CAOUTCHOUC

(30) Priority: 17.12.2021 GB 202118436
(43) Date of publication of application: 02.08.2023
(73) Proprietor: Plastic Energy Limited, London EC4V 5DY (GB)
(72) Inventor: REDSHAW, John, London, Greater London EC4V 5DY (GB)
(74) Representative: Boult Wade Tennant LLP
(86) International application number: PCT/EP2022/086064
(87) International publication number: WO 2023/111134

(56) References cited:
- EP-A1- 2 465 904
- EP-B1- 3 401 360
- US-A- 4 221 608
- US-B2- 7 959 890
- US-B2- 9 580 606
- SOGANCIOGLU MERVE ET AL: "Pyrolysis of waste high density polyethylene (HDPE) and low density polyethylene (LDPE) plastics and production of epoxy composites with their pyrolysis chars", JOURNAL OF CLEANER PRODUCTION, ELSEVIER, AMSTERDAM, NL, vol. 165, 24 July 2017 (2017-07-24), pages 369-381, XP085158099, ISSN: 0959-6526, DOI: 10.1016/J.JCLEPRO.2017.07.157 cited in the application
- SOGANCIOGLU MERVE ET AL: "Behaviour of waste polypropylene pyrolysis char-based epoxy composite materials", ENVIRONMENTAL SCIENCE AND POLLUTION RESEARCH, SPRINGER BERLIN HEIDELBERG, BERLIN/HEIDELBERG, vol. 27, no. 4, 10 December 2019 (2019-12-10), pages 3871-3884, XP037022335, ISSN: 0944-1344, DOI: 10.1007/S11356-019-07028-3 [retrieved on 2019-12-10]

## Description

The present invention relates to a method for the production of a rubber composition and, in particular, to an industrial rubber composition such as an EPDM-type rubber or a tyre rubber. In particular, the method relates to the provision of a rubber composition including char from the pyrolysis of end-of-life plastics as a filler. This material is particularly effective as a substitute for calcium carbonate, enabling a partial reduction in carbon black concentration in rubbers utilising both carbon black and calcium carbonate filler, owing to its improved strength properties over calcium carbonate, while at the same time providing a key reuse option for the by-products of a plastics reuse mechanism.

End-of-life plastic (ELP) chemical recycling is an emerging technology designed to recycle mixed waste-plastics into a variety of liquid hydrocarbon products. The waste plastics for use in such a process may, for example, include low density polyethylene (LDPE), high density polyethylene (HDPE), polystyrene (PS), and/or polypropylene (PP).

Pyrolysis treatments are known for converting these waste plastics into the liquid hydrocarbon products by heating and then pumping the plastic feed in molten form into reactor vessels. The reactor vessels are heated by combustion systems to a temperature in excess of 350°C. This produces rich saturated hydrocarbon vapour from the molten plastic. This flows out of the reactor vessels through contactor vessels and will condense the heavier vapour fractions to maintain a target outlet temperature set point which is determined by the end-product specification. This is then distilled at near-atmospheric pressures in a downstream condensing column. This process obtains a so-called pyrolysis oil. The pyrolysis oil can be used in the manufacture of virgin plastics or the production of a fuel.

At the same time, there is produced a solid char material. The char is formed primarily of some carbonised carbonaceous material and plastic polymer forming additives, pigmentation and ELP contamination. This material is typically disposed of in landfill and constitutes an undesirable by-product of the pyrolysis oil production process.

WO2021123822 discloses a method for pyrolysing plastic material. The method comprises the steps of: heating and densifying plastic material; transporting the plastic material to one or more reactors; and pyrolysing the plastic material in the one or more reactors. The plastic material is maintained in a heated state during the transporting step.

WO2016030460 discloses a pyrolysis reactor system suitable for the treatment of end-of-life plastics.

WO2011077419 also discloses a process for treating waste plastics material to provide at least one on-specification fuel product. Plastics material is melted (4) and then pyrolysed in an oxygen-free atmosphere to provide pyrolysis gases. The pyrolysis gases are brought into contact with plates (13) in a contactor vessel (7) so that some long chain gas components condense and return to be further pyrolysed to achieve thermal degradation. Short chain gas components exit the contactor in gaseous form; and proceed to distillation to provide one or more on-specification fuel products. There is a pipe (12) directly linking the pyrolysis chamber (6) to the contactor (7), suitable for conveying upwardly-moving pyrolysis gases and downwardly-flowing long-chain liquid for thermal degradation. There is a vacuum distillation tower (26) for further processing of liquid feeds from the first (atmospheric) distillation column (20). It has been found that having thermal degradation in the contactor and pyrolysis chamber and by having a second, vacuum, distillation column helps to provide a particularly good quality on-specification liquid fuel. US9580606B2 discloses a method for recycling a scrap rubber, which method comprises the following steps: i) pyrolyzing a scrap rubber to obtain a char material; ii) milling the char material obtained in step i) to obtain a carbon black powder; 4 characterized in that the pyrolysis in step i) comprises at least a two-stage pyrolysis process, wherein the said two-stage pyrolysis process comprises: a) a first pyrolysis stage to obtain an intermediate char material and b) a second pyrolysis stage to obtain a char material, characterized in that the first pyrolysis stage a) is carried out in a first rotary kiln and the second pyrolysis stage b) is carried out in a second rotary kiln, wherein the temperature during the first pyrolysis stage a) is between 630-670° C. and the temperature during the second pyrolysis stage b) is between 680-720° C., the temperature during the second pyrolysis stage b) being higher than the temperature during the first pyrolysis stage a), wherein the char material obtained from the second pyrolysis stage has a polyaromatic hydrocarbon (PAH) content less than 0.5 mg/kg. The obtained CB present a surface area higher than 66 m2/g. The amount of carbon is from 60 to 98 wt %_{.} The CB can be used as filler in SBR or EPDM rubbers.

JPS4884847 relates to a filler for plastics and rubbers which comprises an active group introduced into a carbonaceous solid material obtained by a thermal decomposition reaction of a carbon-containing material. This disclosure exemplifies embodiments which comprise thermally decomposing polymers derived from (poly)vinyl chloride and treating with agents such as chlorosulfuric acid or thioglycolic acid, such functionalised products being essential to the disclosure for providing advantages over known fillers such as carbon black.

Sogancioglu et al., "Pyrolysis of waste high density polyethylene (HDPE) and low density polyethylene (LDPE) plastics and production of epoxy composites with their pyrolysis chars", Journal of Cleaner Production, 165, 2017, 369-81, discloses use of LDPE and HDPE pyrolysis char as additives in the production of epoxy composite material.

Sogancioglu et al., "Production of Epoxy Composite from the Pyrolysis Char of Washed PET Wastes" Energy Procedia, 118, 2017, 216-220, discloses use of PET pyrolysis char as an additive in the production of epoxy composite material.

Sogancioglu et al., "Behaviour of waste polypropylene pyrolysis char-based epoxy composite materials", Environmental Science and Pollution Research, 27, 2020, 3871-3884, discloses use of PP pyrolysis char as an additive in the production of epoxy composite material.

Yel et al., "ANN Modelling for Predicting the Water Absorption of Composites with Waste Plastic Pyrolysis Char Fillers", Data Science and Applications, 1(1), 2018, 45-51, relates to a study of water absorption quantity of epoxy composites with pyrolysis char additives using multilayer perceptron artificial neural network modelling.

Ahmetli et al., "Epoxy Composites Based on Inexpensive Char Filler Obtained From Plastic Waste and Natural Resources", Polymer Composites, 34, 2013, 500-509, discloses use of PET pyrolysis char as an additive in the production of epoxy composite material.

Harussani et al., "Pyrolysis of polypropylene plastic waste into carbonaceous char: Priority of plastic waste management amidst COVID-19 pandemic", Science of the Total Environment, 803, 2021, 149911, is a review of PP pyrolysis, and acknowledges Sogancioglu et al., (2020) described above as disclosing the use of PP pyrolysis char as an additive in the production of epoxy composite material.

EPDM rubber (ethylene propylene diene monomer rubber) is a type of synthetic rubber that is used in many applications. As a durable elastomer, EPDM is conformable, impermeable and a good insulator. Solid EPDM and expanded EPDM foam are often used for sealing and gasketing, as well as membranes and diaphragms. EPDM is often used when a component must prevent fluid flow while remaining flexible. It can also be used to provide cushioning or elasticity.

EPDM is an M-Class rubber under ASTM standard D-1418; the M class comprises elastomers having a saturated chain of the polyethylene type (the M deriving from the more correct term polymethylene). EPDM is made from ethylene, propylene, and a diene comonomer that enables crosslinking via sulfur vulcanization.

As with most rubbers, EPDM is always used compounded with fillers such as carbon black and calcium carbonate, with plasticisers such as paraffinic oils, and has useful rubbery properties only when crosslinked. Crosslinking mostly takes place via vulcanisation with sulfur, but is also accomplished with peroxides (for better heat resistance) or with phenolic resins.

Some fillers, such as carbon black, are reinforcing but energy intensive to manufacture and thus have a high environmental cost. Carbon blacks have a high environmental footprint owing to the production process, which involves partial combustion of hydrocarbons to produce the carbon black. In addition, carbon blacks are expensive.

Accordingly, it is an object of the present invention to provide an improved method of producing rubbers, in particular one which provides an optimal use for the char by-product of the pyrolysis treatment, or at least to tackle problems associated therewith in the prior art, or provide a commercially viable alternative thereto.

According to a first aspect there is provided a method for the production of a rubber or thermoplastic polymer composition, the method comprising:
providing an end-of-life-plastic feedstock;
pyrolysing the feedstock to produce a pyrolysis char; and
mixing the pyrolysis char into a rubber or thermoplastic polymer composition in an amount of from 0.5 to 60 wt%, based on the total weight of the mixture.

The present disclosure will now be described further. In the following passages different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous. It is intended that the features disclosed in relation to the product may be combined with those disclosed in relation to the method and vice versa.

The present invention relates to a method for the production of a rubber or thermoplastic polymer composition. That is, the method is suitable for providing a rubber composition without compromising its structural properties and which can act as a substitute for calcium carbonate and at least a partial substitute for carbon black.

The present invention provides a method reliant on char obtained from the pyrolysis of end-of-life plastics. The use of this char as a filler has a number of benefits. In particular, there is an increase in recycled content of the finished product, providing increased circularity of the product. There is a decrease in the carbon black content, thereby having a lower CO₂ footprint owing to the reduction in the carbon black content. There is a decrease in virgin materials used, both mineral calcium carbonate and also hydrocarbons required for carbon black manufacture. There is a cost benefit, owing to the substitution of carbon black for our material. Without wishing to be bound by theory, it is considered that the wax content of the char may also enable a reduction in plasticiser content of the finished rubber product.

The method comprises providing an end-of-life-plastic feedstock. End-of-life or contaminated plastic waste feedstock, for plastic chemical recycling, may be received from, for example, municipal recovery facilities, recycling factories, or other plastic collection sources. During a pre-treatment process, the feedstock may be refined such that it only contains plastics suitable for the chemical recycling process, preferably hydrocarbon plastics. Such plastics are those that are formed of hydrocarbons (and therefore consist essential of carbon and hydrogen). Preferably, the hydrocarbon plastic is polyethylene (PE), such as low density polyethylene (LDPE) and/or high density polyethylene (HDPE), polystyrene (PS) and/or polypropylene (PP). Unsuitable materials, such as metals, paper and card, and glass, as well as humidity from the plastic waste, may be removed. For the avoidance of doubt, ELPs do not include rubbers or tyres.

As will be appreciated, the recycling of end-of-life plastics introduces various impurities that are preferably removed from the feedstock before recycling during the pre-treatment, for example by washing. Preferably, the ELP feedstock comprises at least 80 wt% plastic, more preferably at least 90 wt% plastic and most preferably consists essentially of plastic. Moreover, it is preferred that the feedstock is substantially free of non-hydrocarbon plastic such as polyethylene terephthalate (PET) and polyvinylchloride (PVC). In a preferred embodiment, the ELP feedstock comprises non-aromatic hydrocarbon plastics, for example PE and/or PP.

The method comprises pyrolysing the feedstock to produce a pyrolysis char. Pyrolysis is the heating of a material in a substantially oxygen-free environment. The preferred method is described in more detail below.

Preferably the step of pyrolysing the feedstock to produce a pyrolysis char further comprises a char drying step to adjust the wax content of the char material. This step is performed before the char leaves the pyrolysis reactor. Adjusting the wax content of the material can help to optimise the compatibility of the material with the rubber composition. Preferably the wax content is from 0 to 10 wt%.

Preferably, after pyrolysing the feedstock to produce a pyrolysis char, and before mixing the pyrolysis char into a rubber or thermoplastic polymer composition, the char is quenched in water. This helps to provide a product having a suitable moisture content compatible with the rubber. The char will generally be dewatered but not be further dried before use.

If necessary there may be a further milling or grinding step performed on the char to reach a desired particle size, such as ball milling, bead milling or jet milling. Alternatively, the char may be milled via a wet milling approach, which is followed by drying of the milled material. However, advantageously, the method described herein can be performed without any such step since the particle sizes directly obtained from the process are already suitable. Preferably the pyrolysis char has a mean primary particle size (D50) of less than 50 microns. More preferably, the pyrolysis char has a D50 of less than 10 microns, even more preferably less than 5 microns or even less than 2 microns, which may be achieved by jet milling. It is also preferred that the pyrolysis char has a D90 particle size of less than 10 microns and/or a D98 of less than 15 microns. Particle sizes can be measured using dry laser diffraction techniques which are well known in the art. Primary particles are the smallest constituent particles. That is, any agglomerate particle is comprised of primary particles adhered together. Primary particles cannot be made smaller, except with the application of high energy techniques such as high shear.

Preferably the method further comprises a further step of milling the char in order to ensure a more consistent particle size distribution of the particles.

Preferably the char is used in the rubber or thermoplastic polymer composition without any chemical modification or treatment which would produce a functionalised char (for example, reaction with sulfuric acid to sulfonate the char).

The method comprises mixing the pyrolysis char into a rubber or thermoplastic polymer composition. The disclosure herein with reference to a rubber composition therefore applies equally to a thermoplastic polymer composition. The mixing step may be performed by any suitable mixing apparatus.

After the mixing step, the method may optionally further comprise curing the mixture of the pyrolysis char and rubber/thermoplastic polymer composition with sulphur or peroxide. The peroxide may be hydrogen peroxide. Curing with peroxide advantageously results in a formulation that maintains consistent properties with aging.

EPDM rubbers are a well-known class of polymer. EPDM is made from ethylene, propylene, and a diene comonomer that enables crosslinking via sulfur vulcanization. Preferably the EPDM rubber comprises from 45 to 85 wt% propylene, from 3 to 9 wt% non-conjugated diene monomers and the balance ethylene.

Preferably the rubber composition further comprises a bulking filler, preferably calcium carbonate. Preferably the rubber composition further comprises a reinforcing filler, preferably carbon black. Preferably the rubber composition is substantially devoid of any further filler materials. Optionally, the rubber composition is devoid of any filler materials other than the pyrolysis char.

The rubber may further comprise from 0.1 to 40 wt% carbon black and/or from 0.1 to 40 wt% calcium carbonate. Preferably the rubber may further comprise from 1 to 20 wt% carbon black and/or from 1 to 20 wt% calcium carbonate.

The char is mixed into the rubber composition in an amount of from 0.5 to 60 wt%, based on the total weight of the mixture, preferably 2 to 40 wt%, more preferably from 5 to 30 wt%. These levels of addition are suitable for providing meaningful improvements in the properties without compromising the material properties of the rubber. Preferably the char is added as a substitute for at least a portion of, preferably all, of the carbon black and/or calcium carbonate.

Preferred thermoplastic polymer compositions include polypropylene and/or polyvinylchloride.

The pyrolysis char obtained from end-of-life plastics has the following composition (by dry weight):

| **Component** | **Minimum Value (wt%)** | **Maximum Value (wt%)** | **Method** |
|---|---|---|---|
| Carbon | 35 | 60 | |
| Hydrogen | 1 | 5 | ASTM D5373 |
| Nitrogen | 0 | 3 | ASTM D5373 |
| Sulphur | 0 | 3 | ASTM D4239 |
| Oxygen | 0 | 25 | |
| Chlorine | 0 | 5 | ICP-MS |
| Ash | 30 | 60 | |
| Calcium | 0 | 35 | XRF |
| Silicon | 0 | 10 | |
| Iron | 0 | 4 | XRF |
| Aluminium | 0 | 4 | XRF |
| Titanium | 0 | 5 | XRF |
| Sodium | 0 | 3 | XRF |
| Magnesium | 0 | 3 | XRF |
| Potassium | 0 | 3 | XRF |
| Wax content | 0 | 10 | |
| Density | 0.85 (g/cm³) | 1.25 (g/cm³) | |

Preferably the composition is substantially devoid of any further filler materials.

Preferably, the pyrolysis char has a carbon content of from 35 wt% to 60 wt%, more preferably from 35 wt% to 50 wt%, Preferably, the pyrolysis char has an ash content of from 30 wt% to 60 wt%, more preferably from 40 wt% to 50 wt%. As will be appreciated by those skilled in the art, ash is sum of inorganic (non-carbonaceous) components remaining in the char after pyrolysis. As such, the char consists of carbon, ash and optionally wax. Preferably the pyrolysis char has a surface area of 20 m²/g or less, preferably 2 m²/g or less. Preferably, the pyrolysis char has a density of 1.25 g/cm³ or less, preferably from 0.9 to 1.2 g/cm³. In contrast, a biochar obtained by the pyrolysis of wood typically has a surface area in excess of 200 m²/g.

The char characterised by any or all of these parameters is particularly suitable for the present invention. Most particularly, the inventors believe that the surface area being less than 20 m²/g is significantly lower than that of other chars known in the art which are often described as porous, and used for their porosity. The surface area of the char can be measured using conventional techniques, for example by nitrogen surface area (NSA) measurements. The surface area may be measured in accordance with ASTM D6556.

Whilst the prior art acknowledged in the background makes use of plastic char, this is almost exclusively as an additive in the production of epoxy composites. However, epoxy resins are highly cross-linked thermoset materials with many cross-links between different chains. The high degree of cross-linking means that the material is already very stiff and rigid. In addition, the epoxy resin backbone does not interact with a filler or additive in the same way as rubber or thermoplastic polymers. Instead, the epoxy compound provides a matrix which encapsulates the fillers used, where a filler serves to fill voids that would otherwise form during cross-linking. Thus filler is added to epoxy resin to reduce the ability for the resin to deform.

On the contrary, in rubbers and thermoplastics, fillers such as carbon black are added to interact with the polymer backbone, changing the properties of the final product. The filler is not physically trapped inside the polymer matrix and must interact with the polymer matrix. The ability for a given material to be used as a filler in a thermosetting, highly cross-linked epoxy resin does not mean that the filler will be suitable as a filler in other applications. By way of example, it is well-known to use glass fibres and carbon fibres as fillers in epoxy resins to provide increased strength properties. However, owing to their poor interaction with polymer backbones of thermoplastics, these materials are detrimental as fillers in rubbers or thermoplastics, weakening the polymer matrix, rather than improving the performance properties.

The inventors were surprised to find that the char described herein may be used in a rubber or thermoplastic polymer composition with advantageous effect and therefore may be used as a replacement for calcium carbonate and/or carbon black. For example, tensile strength and elongation at break can be increased in rubber samples compared to baseline sample manufactured with calcium carbonate.

In view of the foregoing, a particularly preferred embodiment is a method for the production of a rubber composition, the method comprising:
providing an end-of-life-plastic feedstock, wherein the end-of-life-plastic feedstock comprises hydrocarbon plastic;
pyrolysing the feedstock to produce a pyrolysis char; and
mixing the pyrolysis char into a rubber or thermoplastic polymer composition, preferably a rubber composition, in an amount of from 0.5 to 60 wt%, based on the total weight of the mixture. The ELP feedstock is substantially free of non-hydrocarbon plastic such as PET and PVC and is preferably selected from the group consisting of polyethylene (PE) (including LDPE and HDPE), polystyrene (PS), polypropylene (PP), and mixtures thereof. It is also particularly preferred that the pyrolysis char has a surface area of 20 m²/g or less.

According to a further aspect there is provided a method for the manufacture of a rubber component, preferably a tyre, or a thermoplastic polymer component, the method comprising:
performing the method according as described herein; and
shaping the rubber or thermoplastic polymer composition to form the component.

According to a further aspect there is provided a rubber or thermoplastic polymer composition, preferably in the form of a tyre, obtainable by the method described herein.

According to a further aspect there is provided a composition comprising from 0.5 to 60 wt% of a char material and the balance a rubber or thermoplastic polymer material, wherein the char material is a pyrolysis char having a carbon content of from 35 wt% to 60 wt%, a surface area of 20 m²/g or less, and a density of 1.25 g/cm³ or less. Preferably the char is as described herein.

According to a further aspect there is provided the use of a pyrolysis char obtained from the pyrolysis of end-of-life plastics as a substitute for carbon black and/or calcium carbonate in rubber compositions.

All aspects of the methods described herein may be applied equally to these further aspects relating to uses of the char.

There is further provided the use of a pyrolysis char obtained from the pyrolysis of end-of-life plastics to produce a rubber or plastic composition with a lower carbon footprint.

There is further provided the use of a pyrolysis char obtained from the pyrolysis of end-of-life plastics to produce a rubber or plastic composition with a lower environmental footprint and with a higher proportion of recycled content.

There is further provided the use of a pyrolysis char obtained from the pyrolysis of end-of-life plastics comprising hydrocarbon plastic to increase the thermal insulation properties of a thermoplastic or rubber composition.

There is further provided the use of a pyrolysis char obtained from the pyrolysis of end-of-life plastics comprising hydrocarbon plastic to increase the stiffness and rigidity of thermoplastics and rubbers.

There is further provided the use of a pyrolysis char obtained from the pyrolysis of end-of-life plastics comprising hydrocarbon plastic to reduce the slouching of thermoplastics such as HDPE and PP.

There is further provided the use of a pyrolysis char obtained from the pyrolysis of end-of-life plastics comprising hydrocarbon plastic to lower the setting time of rubbers and thermoplastics in injection and other forming moulds, enabling increased production throughput.

In these further aspects related to the use of a pyrolysis char, it is particularly preferred that the pyrolysis char is obtained from the pyrolysis of end-of-life plastics comprising hydrocarbon plastic, for example PE, PP and/or PS, and is used in a rubber composition or a thermoplastic product.

Methods for pyrolysis of end-of-life plastics are well known in the art, including, for example, in WO2021123822, WO2016030460 and WO2011077419 which are each incorporated herein by reference. The preferred method of pyrolysis will now be described further in more detail.

Preferably the method for pyrolysis of end-of-life plastics involves the steps of:
melting a waste plastics material,
pyrolysing the molten material in an oxygen-free atmosphere to provide pyrolysis gases and a pyrolysis char;
bringing the pyrolysis gases into a contactor having a bank of condenser elements so that some long chain gas components condense on said elements,
returning said condensed long-chain material to be further pyrolysed to achieve thermal degradation, and allowing short chain gas components to exit from the contactor in gaseous form; and
distilling said pyrolysis gases from the contactor in a distillation column to provide one or more fuel products.

The method described herein can be performed on a batch or continuous basis. Continuous treatment is preferred when there is a continuous large supply of pyrolysis char available for treatment. Batch processes are more desirable where there are smaller volumes of oil being produced, or where it is being produced on an intermittent basis. In a batch process there may be a plurality of holding vessels used in parallel, giving a quasi-continuous effect on the treatment performed.

Preferably the contactor elements comprises a plurality of plates forming an arduous path for the pyrolysis gases in the contactor. Moreover, preferably the plates are sloped downwardly for runoff of the condensed long-chain hydrocarbon, and include apertures to allow upward progression of pyrolysis gases. In one embodiment, the contactor elements comprise arrays of plates on both sides of a gas path. Preferably the contactor element plates are of stainless steel. The contactor may be actively cooled such as by a heat exchanger for at least one contactor element.

Alternative cooling means may comprise a contactor jacket and cooling fluid is directed into the jacket. There may be a valve linking the jacket with a flue, whereby opening of the valve causing cooling by down-draught and closing of the valve causing heating. The valve may provide access to a flue for exhaust gases of a combustion unit of the pyrolysis chamber.

Preferably there is a pipe directly linking the pyrolysis chamber to the contactor, the pipe being arranged for conveying upwardly-moving pyrolysis gases and downwardly-flowing long-chain liquid for thermal degradation.

Preferably infeed to the pyrolysis chamber is controlled according to monitoring of level of molten plastics in the chamber, as detected by a gamma radiation detector arranged to emit gamma radiation through the chamber and detect the radiation on an opposed side, intensity of received radiation indicating the density of contents of the chamber.

Preferably the pyrolysis chamber is agitated by rotation of at least two helical blades arranged to rotate close to an internal surface of the pyrolysis chamber. Optionally, the pyrolysis chamber is further agitated by a central auger. Advantageously, the auger can be located so that reverse operation of it causes output of char via a char outlet.

Preferably the temperature of pyrolysis gases at an outlet of the contactor is maintained in the range of 240°C to 280°C. The contactor outlet temperature can be maintained by a heat exchanger at a contactor outlet.

A bottom section of the distillation column is preferably maintained at a temperature in the range of 150°C to 240°C, preferably 170°C to 230°C. The top of the distillation column is preferably maintained at a temperature in the range of 70°C to 110°C, preferably approximately 90°C - 100°C.

Optionally there is further distillation of some material in a vacuum distillation column. Heavy or waxy oil fractions are drawn from the bottom of the vacuum distillation column and can be recycled back to the pyrolysis chamber. Desired grade on-specification pyrolysis oil can be drawn from a middle section of the vacuum distillation column. Light fractions are drawn from a top section of the vacuum distillation column and are condensed.

The method of producing the char from end-of-life plastics will now be discussed in more detail.

The end-of-life plastic (ELP) from the walking floor silo is discharged into the extruder hopper, which is designed to deliver heated ELP to the reactors. The extruder is supplied with variable speed drives that permit lower flow rates to be fed to the reactors, if required, during start-up and shutdown of an extruder. The extruder heats up the plastic from ambient conditions to the target set temperature using shear force generated by the rotation of the extruder screw. The high temperatures on the outlet of the extruder is required to ensure that the plastic temperature, which is lower than the reactor operating temperature, does not adversely affect the thermal performance of the reactor when loaded in.

The extruder barrel can be electrically heated, especially during start-up. During normal operation, the electric heating function is not used because the shear force from the auger screw will provide sufficient heat to melt the plastic.

Plasticised ELP is expelled from the extruder under high pressure into a melt feed line that connects the extruder to three Reactors via a header pipe. Multiple instruments monitor pressure and temperature along the melt feed line during feeding to assure flow.

The plant has multiple jacketed reactors that form the core of the process. Each conical based reactor is enclosed by a reactor jacket which provides the heat required to decompose the ELP and generate the desired hydrocarbon vapour. Each reactor is physically located above a char receiver and below a contactor.

Each individual reactor is provided with an agitator designed to maintain thermal efficiency of the process by minimising char build up on the walls of the reactor by maintaining close steel to steel clearance with the vessel walls; suspend any char produced during pyrolysis in the plastic mass to prevent build-up on the internal surfaces of the reactor; and homogenise the molten ELP in the reactor during processing; and remove char once pyrolysis is complete and the char is dry.

The agitator homogenises the vessel mass by pushing ELP down the walls of the reactor, to the centre of the vessel and up the agitator shaft when running in forward. When operating in reverse, it pushes medium down the agitator shaft and from the centre of the vessel to the vessel walls. This promotes char removal through a bottom outlet nozzle located at the lowest point of the vessel conical dished end.

An individual reactor is designed to process 5 tonnes of ELP every day. Future reactors may have a higher capacity. Reactors are grouped in threes and each trio of reactors is fed sequentially such that only one of each trio of vessels is being fed with fresh ELP at any one time whilst the other two are either completing pyrolysis or processing char.

ELP is fed into a reactor vessel by its respective Extruder. The reactor is operated at a temperature of 350°C or more, preferably 380 to 430°C, and up to 0.5 barg in an inerted oxygen free environment. At these temperatures the ELP polymer chains decompose into shorter hydrocarbon chains and are vaporised to form a rich saturated hydrocarbon vapour. This vapour exits the vessel via an outlet located on the top of the vessel which leads to the reactor's respective contactor.

The reactor is designed to operate on a cycle. Each cycle consists of three periods. The first is a ELP feed period known as "charging" in which ELP is loaded to the reactor and pyrolysed. In the second period, pyrolysis is completed and the non-pyrolysable material (char) in the reactor is dried to allow for easy handling after removal from the reactor in anticipation of the next charge of ELP. This stage is called "cooking". The third stage is called "removal" and involves removing char from the reactor by opening the reactor bottom outlet valve and then reversing the reactor's agitator which in turn forces char out of the reactor into the char receiver below it. Once all the char is removed the bottom outlet valve is closed and plastic feeding can recommence.

Char is formed primarily of plastic polymer forming additives, pigmentation and ELP contamination. Char continually forms in the reactor throughout pyrolysis and must be removed prior to commencement of another charge else the effective volume of the reactor reduces.

Char is removed through the bottom outlet nozzle and valve (BOV). When char removal is required the bottom outlet valve is opened to the char receiver below. The agitator is then set to reverse to assist char removal. Char should fall out of the chamber under gravity because of the conical shape of the reactor however if it does not, the agitator has been designed to assist it by breaking up char lumps which may have formed in the nozzle.

Each reactor has its own reactor jacket. The reactor jacket is an internally insulated cylindrical non-pressure vessel with a bespoke internal arrangement for efficient distribution of combustion gases. Heat is provided to the reactor jacket by a burner attached to a separate combustion chamber. The heat is provided by combusting syngas or natural gas with preheated air from the combustion air blowers via the cold side of the combustion air preheaters.

When char in a reactor is cooked, dried and ready for removal, any remaining hydrocarbon vapours in the reactor atmosphere must be flushed with nitrogen from the reactor prior to discharging the char into a char receiver. This is to reduce the volume of atmospheric condensable hydrocarbons in the reactor and ensure the atmosphere in the char receiver remains inert.

Char is a fine and light material with the consistency of carbon black and is easy to disturb. To complete Reactor Flush without disturbing the char bed in the reactor, nitrogen must be slowly purged through the chamber (<30m³/hr).

Char is removed from the reactor through the bottom outlet nozzle when the bottom outlet ball valve is open. Char is removed by gravity with the assistance of the reactor agitator operating in reverse. The char receiver, which is located directly underneath the reactor and reactor jacket, can receive char at any temperature between ambient and 450°C.

Completion of char removal is determined when the agitator load decreases to its empty reverse load at the same speed value. Once the char is confirmed removed, the agitator will stop and return to running in the forward direction. The reactor bottom outlet valve will then be flushed clean and closed at which point the reactor is ready to accept another charge of ELP.

A nitrogen blanket is kept on the char receiver at 30mbarg whilst char is held in the receiver. The vessel has a nitrogen control valve to ensure the atmosphere inside the vessel is constantly inert and mitigating against fire risk.

Char is discharged from the vessel through a bottom outlet nozzle, which is connected directly to the inlet of a char auger with cooling jacket. The char auger is designed to process and cool the char to below 60°C at a rate of up to 250kg/hr. The char auger jacket uses cooling water at about 25°C to provide the cooling required to reduce the char's temperature. The auger is kept full of char and a positive nitrogen blanket pressure to minimise risk of air backflow.

Cooled char from the char receivers is discharged from their respective char auger onto a common enclosed conveyor system where the char will be dropped to a char hopper. The char will be stored in a char storage container and weighed by the char scale prior to offtake to char storage area.

The contactor is a jacketed pressure vessel. It contains an internal baffle arrangement that is designed to selectively knock back heavy or long-chain hydrocarbons that have not been sufficiently thermally degraded in the reactor with the application of cooling air through the vessel's jacket. Condensed heavier material drains back into the reactor under gravity where it can be decomposed further to increase desired product volumes. Lighter fractions constitute a pyrolysis oil which is recovered as a desirable product of the process.

Cooled char from the char augers is discharged onto the Char Discharge Belted Conveyor that runs the length of all the core modules, this carries the char to the Char Transfer Belted Conveyor that transfers the char into a Char Storage Container. Once the container is full it will be moved to the Char Storage Area and the container will be replaced with an empty one.

### Figures

The invention will now be described further in relation to the following non-limiting examples.
Figure 1 shows cure profiles for calcium carbonate, pyrolysis char and carbon black This demonstrates that the pyrolysis char does not significantly change the curing behavior of the rubber compared to calcium carbonate filler, but it is faster compared to carbon black.
Figure 2 shows that pyrolysis char has an elastic modulus between calcium carbonate and carbon black.
Figure 3 shows that pyrolysis char has a loss modulus between calcium carbonate and carbon black.

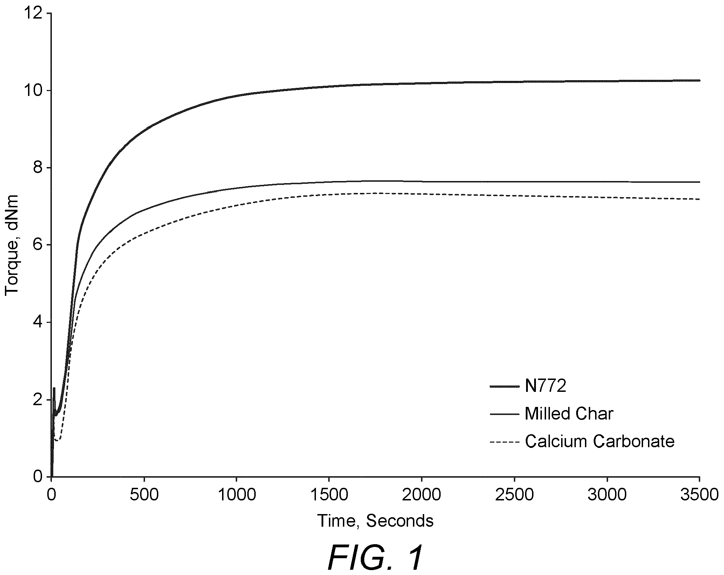

In Figure 1 the y-axis is Torque (dNm) and the x-axis is time (seconds). The highest line at 1000s is that of carbon-black. The lowest line is that of calcium carbonate. In between lies the milled char line.

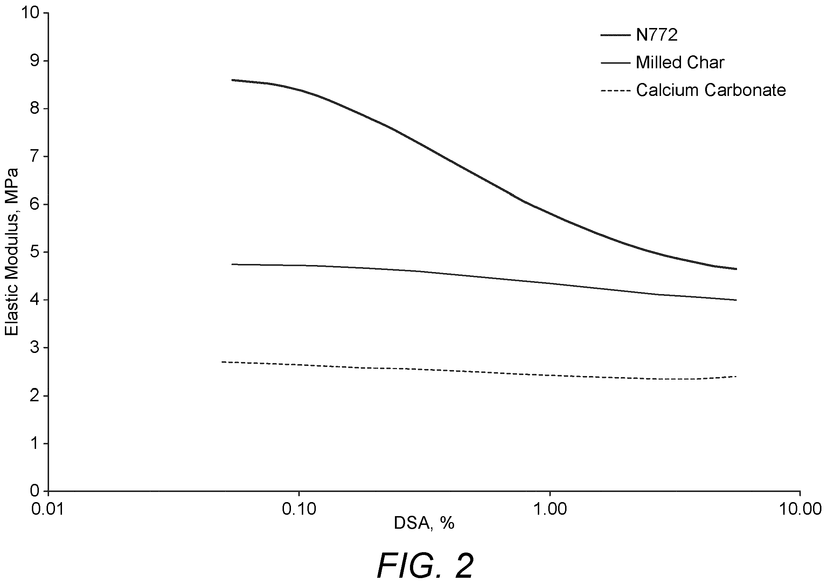

In Figure 2 the y-axis is Elastic Modulus (MPa) and the x-axis is DSA (%). The highest line is that of carbon-black. The lowest line is that of calcium carbonate. In between lies the milled char line.

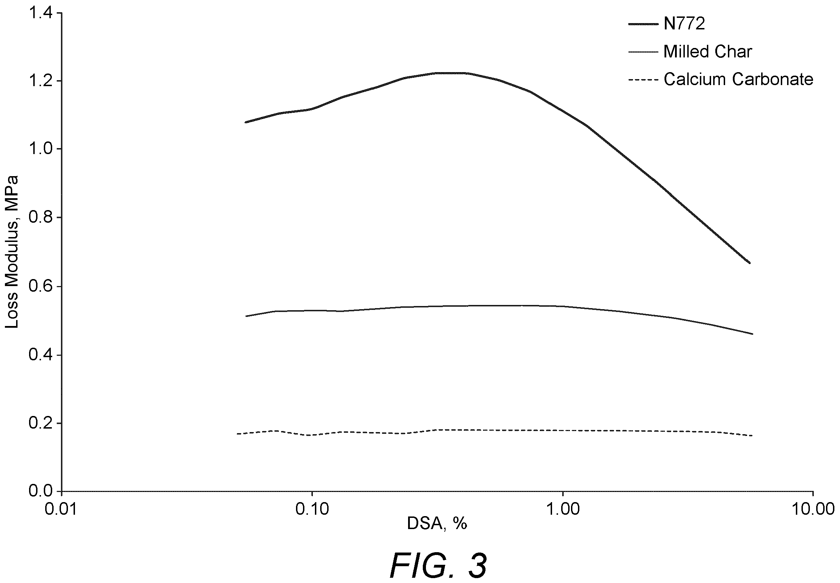

In Figure 3 the y-axis is loss modulus (MPa) and the x-axis is DSA (%). The highest line is that of carbon-black. The lowest line is that of calcium carbonate. In between lies the milled char line.

### Examples

The invention will now be described further in relation to the following non-limiting examples.

Pyrolysis char obtained from the pyrolysis of end-of-life plastics in accordance with the method described herein was tested against a carbon black product (N772) and a calcium carbonate filler in a rubber formulation. Additionally, an example wherein the char was jet milled using an SJ15-ER120 mill to a D50 of 1.61 microns is included.

| **Property** | **Char Rubber Formulation (Ball Milled)** | **Char Rubber Formulation (Jet Milled)** | **CaCO₃ Reference Formulation** | **N772 Reference Formulation** |
|---|---|---|---|---|
| Minimum torque rheology (dNm) | 1.93 | 1.55 | 0.92 | 1.60 |
| Maximum torque rheology (dNm) | 7.66 | 8.13 | 7.33 | 10.26 |
| Ts2 scorching time (min) | 1.71 | 1.94 | 1.54 | 1.56 |
| 90% of maximum torque (min) | 9.96 | 10.40 | 11.97 | 11.22 |
| Density (g/cm³) | 1.118 | 1.102 | 1.192 | 1.120 |
| Hardness (Shore A°) | 48 | 46 | 38 | 55 |
| M100 (MPa) | 1.20 | 1.36 | 0.66 | 1.96 |
| M300 (MPa) | 3.25 | 4.13 | 1.38 | 7.02 |
| Tensile (MPa) | 4.4 | 6.2 | 2.1 | 7.2 |
| Elongation at break (%) | 409 | 518 | 393 | 316 |

The data demonstrated that the char material imparted greater strengthening properties than calcium carbonate, but lower than N772 carbon black. As such, it is believed that a partial or full replacement of calcium carbonate filler for the ELP pyrolysis char will enable a reduction in the use of carbon black in rubber compounds. The inventors were also surprised to find that char reduces the setting time enabling more rapid part production (as demonstrated by the reduced time at 90% of maximum torque). A reduction in setting time enables increased part production since moulds can be moved away more quickly.

In addition, the char produced a significantly less dense final product than the calcium carbonate, and less dense even than the carbon black. Making the material more light weight is important to several industries, especially the automotive and aviation industries, enabling increased fuel efficiency and electric vehicle range.

The below data demonstrates that pyrolysis char has filler-filler interactions and filler-polymer interaction strengths between those of calcium carbonate and carbon black. In addition, the elastic and energy loss properties are between carbon black and calcium carbonate.

| **Property** | **Milled Char** | **Jet Milled Char** | **CaCO₃ Reference Formulation** | **N772 Reference Formulation** |
|---|---|---|---|---|
| ΔE' | 0.76 | 0.45 | 0.31 | 3.96 |
| E'₀ | 4.74 | 3.69 | 2.70 | 8.59 |
| E'∞ (MPa) | 3.97 | 3.24 | 2.39 | 4.63 |
| Tan δ max (/) | 0.125 | 0.093 | 0.076 | 0.192 |

The formulations used in the study are shown below:

| **Ingredients** | **Composition Parts** |
|---|---|
| Keltan 4465 | 150 |
| Filler (char, N772 carbon black, CaCO₃) | 115 |
| Paraffinic oil | 12.5 |
| PEG4000 | 2 |
| Zinc oxide | 5 |
| Stearic acid | 2 |
| Sulphur | 1.5 |
| MBT | 1 |
| Rhenocure TP50 | 2.7 |
| TBzTD-70 | 1.5 |

In another example, pyrolysis char obtained from the pyrolysis of end-of-life plastics in accordance with the method described herein was tested against a calcium carbonate filler in a PVC formulation in accordance with the table below.

| **Component** | **Baseline Formulation** | **Char Formulation** |
|---|---|---|
| PVC | 60 | 60 |
| CaCO₃ | 40 | |
| Char (Jet Milled) | | 40 |
| Plasticiser (DINP) | 40 | 40 |
| Calcium stearate | 3 | 3 |
| Antimony trioxide | 3 | 3 |
| Stearic acid | 0.5 | 0.5 |

The material was mixed on a two roll mill at 160°C and was then compression moulded at 170°C. The data below demonstrated increased rigidity in PVC formulations and increased hardness with the char formulation. There is also demonstrated vastly lower thermal conductivity of PVC compared to calcium carbonate baseline.

| **Property** | **Char Formulation** | **CaCO₃ Reference Formulation** |
|---|---|---|
| Melt-flow index (g/10 minutes) | 1.4864 | 1.4262 |
| Thermal conductivity mean (W/mK) | 0.324 | 0.443 |
| Tensile strength (MPa) | 19.1 | 17.9 |
| Tensile strength range (MPa) | 1.0 | 0.8 |
| Extension at break (mm) | 40.0 | 102.0 |
| Extension at break range (mm) | 36.0 | 25.9 |
| Shore D hardness | 55 | 51 |

In another example, pyrolysis char obtained from the pyrolysis of end-of-life plastics in accordance with the method described herein was tested against a calcium carbonate filler in a PP formulation in accordance with the table below.

| **Component** | **Baseline Formulation** | **Char Formulation** |
|---|---|---|
| Polypropylene | 70% | 70% |
| CaCO₃ | 30% | |
| Char | | 30% |

| **Property** | **Char Formulation** | **CaCO₃ Reference Formulation** |
|---|---|---|
| Melt-flow index (g/10 minutes) | 7.396 | 9.108 |
| Thermal conductivity mean (W/mK) | 0.318 | 0.362 |
| Tensile strength (MPa) | 21.2 | 18.0 |
| Tensile strength standard deviation (MPa) | 0.63 | 0.12 |
| Young's modulus (MPa) | 1410.73 | 778.08 |
| Young's modulus standard deviation (MPa) | 35.28 | 9.31 |
| Impact strength (kJ/m³) | 3.7 | 4.24 |
| Shore D hardness | 63 | 64 |

- No other additives or plasticisers were added to the PP.
- Extrusion to mix the CaCOs and char into the PP were performed with a zone 1 temperature of 180°C, zone 2 temperature of 190°C and a die temperature of 195°C.
- Injection moulding was performed with a zone 1 temperature of 175°C, zone 2 temperature of 180°C, zone 3 temperature of 190°C and a die temperature of 195°C.

The data demonstrates reduced thermal conductivity, lower density, increased tensile strength and Young's modulus as well as good impact strength for the increase in tensile strength for the char formulation. Thus, the present invention allows for increased stiffness without as much brittleness as may otherwise have been expected.

Jet milled, cured pyrolysis char obtained from the pyrolysis of end-of-life plastics in accordance with the method described herein were tested against an N700 series carbon black and a calcium carbonate filler in a rubber formulation.

| | **Formulation Number and Description** | | | |
|---|---|---|---|---|
| | **1** | **2** | **3** | **4** |
| **Ingredients (mass parts)** | **Sulphur-cured carbon black control** | **Sulphur-cured char rubber formulation** | **Peroxide-cured carbon black control** | **Peroxide-cured char rubber formulation** |
| **Keltan 8550C** | 100 | 100 | 100 | 100 |
| **Carbon black N550** | 70 | 70 | 70 | 70 |
| **Carbon black N772** | 40 | | 40 | |
| **Jet-milled char** | | 40 | | 40 |
| **CaCO₃** | | | | |
| **Process oil** | 70 | 70 | 70 | 70 |
| **Zinc oxide** | 5 | 5 | 5 | 5 |
| **Stearic acid** | 1 | 1 | 1 | 1 |
| **Sulphur curing system** | 7.26 | 7.26 | | |
| **Peroxide curing system** | | | 7.02 | 7.02 |

| | **5** | **6** | **7** | **8** |
|---|---|---|---|---|
| | **Sulphur-cured CaCO₃ control** | **Sulphur-cured char rubber formulation** | **Peroxide-cured CaCO₃ control** | **Peroxide-cured char rubber formulation** |
| **Keltan 8550C** | 100 | 100 | 100 | 100 |
| **Carbon black N550** | 70 | 70 | 70 | 70 |
| **Carbon black N772** | | | | |
| **Jet-milled char** | | 40 | | 40 |
| **CaCO₃** | 40 | | 40 | |
| **Process oil** | 70 | 70 | 70 | 70 |
| **Zinc oxide** | 5 | 5 | 5 | 5 |
| **Stearic acid** | 1 | 1 | 1 | 1 |
| **Sulphur curing system** | 7.26 | 7.26 | | |
| **Peroxide curing system** | | | 7.02 | 7.02 |

The formulations used in the study are shown below:
Example 6 is a repetition of Example 2. Example 8 is a repetition of Example 4.

To produce the formulations, the ingredients were mixed in a batch mixer and then transferred to a two-roll mill. Mixing conditions were the same for all formulations.

To produce each formulation, the polymers were added to the mixer at 50rpm and stirred for 30 seconds. All other ingredients were then added and mixed to 70°C. The mixing was continued to 100°C. The mixture was then transfered to the two-roll mill and the cure system was added on the two-roll mill. The duration of the mixing step was more than 120 seconds. The front-roll speed was 20 rpm and the roll temperature was 40 °C. The material was passed through the mill several times and removed from the mill as a sheet with a thickness of 6 mm.

The properties of the formulations are set out in the tables below.

| **Formulation Number** | **Density (g/cm³)** |
|---|---|
| 1 | 1.12 |
| 2 | 1.114 |
| 3 | 1.122 |
| 4 | 1.118 |
| 5 | 1.146 |
| 6 | 1.116 |
| 7 | 1.152 |
| 8 | 1.118 |

As can be seen from the table above, the char resulted in a less dense final product. Indeed, the density of the char formulations (formulations 2,4,6 and 8) is significantly lower than the calcium carbonate formulations (formulations 5 and 7), and lower than the carbon black formulations (formulations 1 and 3).

Reducing density is important to several industries, especially the automotive and aviation industries, enabling increased fuel efficiency and electric vehicle range. Lighter weight products require less energy to move. Furthermore, lighter weight products may require less engineering support on construction sites, thus potentially reducing the use of construction materials and the associated CO2 emissions related to their production.

| **Formulation Number** | **Time for Mooney viscosity to increase by three units from minimum viscosity at 125°C (seconds)** | **Time for Mooney viscosity to increase by five units from minimum viscosity at 125°C (seconds)** |
|---|---|---|
| 1 | 1761.2 | 2009 |
| 2 | 1479.8 | 1645.8 |
| 3 | 1033.2 | 1079.6 |
| 4 | 536.4 | 594.4 |
| 5 | 2333.4 | 2623 |
| 6 | 1589.4 | 1784.8 |
| 7 | 1107.2 | 1172.6 |
| 8 | 575.4 | 639.8 |

The data in the table above indicates the time required to increase Mooney viscosity by three or five units from the minimum viscosity at 125°C. This data demonstrates that the Mooney viscosity curing time in both the sulphur and peroxide cured char formulations (formulations 2,4,6 and 8) is greatly reduced compared to calcium carbonate and carbon black. The decrease in curing time is replicated in curing at 180°C. A decrease in curing time, and so a decrease in compounding time, is advantageous as this enables more product to be made on the same compounding line thereby increasing throughput of the product.

| | **Formulation Number** | | | | | | | |
|---|---|---|---|---|---|---|---|---|
| **Property** | **1** | **2** | **3** | **4** | **5** | **6** | **7** | **8** |
| **Force required to elongate by 10% (MPa)** | 0.5 | 0.4 | 0.5 | 0.4 | 0.4 | 0.4 | 0.3 | 0.4 |
| **Force required to elongate by 25% (MPa)** | 1 | 0.8 | 0.8 | 0.7 | 0.7 | 0.8 | 0.6 | 0.7 |
| **Force required to elongate by 50% (MPa)** | 1.6 | 1.2 | 1.3 | 1.2 | 1.2 | 1.3 | 0.9 | 1.1 |
| **Force required to elongate by 100% (MPa)** | 3.5 | 2.6 | 3.1 | 2.6 | 2.1 | 2.7 | 1.6 | 2.4 |
| **Force required to elongate by 300% (MPa)** | 12.7 | 9.3 | - | 12.5 | 8.1 | 9.7 | 8.6 | 11.9 |
| **Elongation at Break (%)** | 395 | 454 | 255 | 314 | 398 | 414 | 386 | 323 |
| **Hardness (Shore A)** | 61.77 | 56.47 | 56.83 | 53.93 | 53.63 | 55.87 | 51.1 | 53.9 |
| **Tear resistance (N/mm)** | 7.1 | 4.8 | 7 | 4.5 | 4 | 4.6 | 3.4 | 3.2 |

The table above indicates the properties of the fresh compounded materials (fresh rubber samples). As can be seen, the char material (see formulations 2,4,6,8) is more reinforcing than the calcium carbonate (see formulations 5 and 7) but not as reinforcing as an N700 series carbon black (see formulations 1 and 3).

| | **Formulation Number** | | | | | | | |
|---|---|---|---|---|---|---|---|---|
| **Property** | 1 | 2 | 3 | 4 | 5 | 6 | 7 | 8 |
| **Amount of initial volume lost after 24 hours at 150°C and compressed to 25% of original volume** | 72.35 | 70.76 | 16.04 | 13.41 | 72.39 | 70.07 | 13.92 | 14.31 |
| **Amount of initial volume lost after 72 hours at 125°C and compressed to 25% of original volume** | 72 | 71.12 | 14.07 | 12.68 | 73.7 | 71.42 | 15.38 | 14.28 |
| **Amount of initial volume lost after 72 hours at 23°C and compressed to 25% of original volume** | 7.5 | 4 | 4.51 | 5.51 | 7.84 | 3.82 | 5.45 | 5.94 |
| **Amount of initial volume lost after 24 hours at -25°C and compressed to 25% of original volume** | 31.12 | 26.91 | 30.89 | 31.44 | 26.23 | 26.17 | 31.05 | 30.94 |

The table above demonstrate the permanent deformation of samples after compression testing at different temperatures. The char material did not demonstrate any detrimental impact on compression set.

| | **Formulation Number** | | | | | | | |
|---|---|---|---|---|---|---|---|---|
| **Property after aging in air at 150°C for 24 hours** | **1** | **2** | **3** | **4** | **5** | **6** | **7** | **8** |
| **Force required to elongate by 10% (MPa)** | 0.8 | 0.6 | 0.5 | 0.4 | 0.5 | 0.6 | 0.3 | 0.4 |
| **Force required to elongate by 25% (MPa)** | 1.4 | 1.2 | 0.8 | 0.7 | 0.9 | 1.1 | 0.5 | 0.7 |
| **Force required to elongate by 50% (MPa)** | 2.7 | 2.4 | 1.2 | 1.1 | 1.6 | 2.1 | 0.8 | 1.1 |
| **Force required to elongate by 100% (MPa)** | 6.4 | 6.1 | 2.5 | 2.4 | 3.3 | 5.4 | 1.5 | 2.3 |
| **% Force change required to elongate by 100% (MPa)** | 82.86 | 134.6 2 | -19.35 | -7.69 | 57.14 | 100 | -6.24 | -4.17 |
| **Force required to elongate by 300% (MPa)** | - | - | 14.1 | 9.9 | - | - | - | 9.7 |
| **Elongation at break (%)** | 204 | 175 | 300 | 325 | 247 | 203 | 144 | 342 |
| **Change in elongation at break (%)** | -48.35 | -61.45 | 17.65 | 3.5 | -37.94 | -50.97 | -62.69 | 5.88 |
| **Shore A hardness** | 67.83 | 62.2 | 55.03 | 53.73 | 58.7 | 61.43 | 47.5 | 54.33 |
| **Shore A hardness change (%)** | 6.06 | 5.73 | -1.80 | -0.20 | 5.07 | 5.56 | -3.60 | 0.43 |
| **Tear resistance (N/mm)** | 2.4 | 1.8 | 4.2 | 4.8 | 1.8 | 1.8 | 3.9 | 3.7 |
| **Tear resistance change (%)** | -66.20 | -62.50 | -40 | 6.67 | -55 | -60.87 | 14.71 | 15.63 |

The table above indicates the performance of formulations 1 to 8 after aging in air at 150°C for 24 hours. As shown by the data above, the aged char-containing formulations (formulation numbers 2,4,6,8) performed very similarly to carbon black formulations (formulation numbers 1 and 3), indicating that, if a rubber is anticipated to age significantly, then the char formulations are able to be used as a substitute for an N700 series carbon black. This would also provide an environmental benefit owing to the recycled nature of char produced according to the methods described herein and also a CO₂ benefit, owing to the great reduction in carbon emissions from the production of char compared to carbon black.

| | **Formulation Number** | | | | | | | |
|---|---|---|---|---|---|---|---|---|
| **Property after aging at 125°C for 72 hours** | 1 | 2 | 3 | 4 | 5 | 6 | 7 | 8 |
| Force required to elongate by 10% (MPa) | 0.7 | 0.6 | 0.4 | 0.4 | 0.5 | 0.6 | 0.3 | 0.4 |
| Force required to elongate by 25% (MPa | 1.3 | 1.1 | 0.7 | 0.7 | 0.9 | 1.1 | 0.6 | 0.7 |
| Force required to elongate by 50% (MPa | 2.6 | 2.2 | 1.1 | 1.1 | 1.6 | 2.1 | 0.9 | 1.1 |
| Force required to elongate by 100% (MPa | 6.3 | 5.6 | 2.5 | 2.5 | 3.2 | 5.2 | 1.7 | 2.4 |
| % Force change required to elongate by 100% (MPa | 80.00 | 115.38 | -19.35 | -3.85 | 52.38 | 92.59 | 6.25 | 0.00 |
| Force required to elongate by 300% (MPa) | - | - | 14 | 10.3 | - | - | 8.1 | 10.2 |
| Elongation at break (%) | 207 | 230 | 297 | 332 | 229 | 215 | 364 | 316 |
| Change in elongation at break (%) | -47.59 | -49.34 | 16.47 | 5.73 | -42.46 | -48.07 | -5.70 | -2.17 |
| Shore A hardness | 68.87 | 63.17 | 55.13 | 54.23 | 59.4 | 63.23 | 49.13 | 55 |
| Shore A hardness change (%) | 7.1 | 6.7 | -1.7 | 0.3 | 5.77 | 7.36 | -1.97 | 1.1 |
| Tear resistance (N/mm) | 2.7 | 2.2 | 4 | 4.4 | 1.8 | 1.9 | 2.6 | 4.1 |
| Tear resistance change (%) | -61.97 | -54.17 | -42.86 | -2.22 | -55 | -58.70 | -23.53 | 28.13 |

The table above indicates the performance of formulations 1 to 8 after aging in air at 125°C for 72 hours. As shown in the table above, properties of the aged char formulations (formulation numbers 2, 4, 6, 8) are very similar to the aged N700 series carbon black formulations (formulation numbers 1 and 3). In addition, the peroxide-cured aged char formulations (formulation numbers 4 and 8) have very consistent properties. Accordingly, a product formed of the peroxide-cured char formulation would have very consistent properties over its service life.

| | **Formulation Number** | | | | | | | |
|---|---|---|---|---|---|---|---|---|
| **Property after aging in air at 100°C for 168 hours** | 1 | 2 | 3 | 4 | 5 | 6 | 7 | 8 |
| Force required to elongate by 10% (MPa) | 0.6 | 0.5 | 0.4 | 0.4 | 0.4 | 0.5 | 0.3 | 0.4 |
| Force required to elongate by 25% (MPa | 1.2 | 1 | 0.7 | 0.7 | 0.9 | 1 | 0.6 | 0.7 |
| Force required to elongate by 50% (MPa | 2.2 | 1.9 | 1.2 | 1.1 | 1.4 | 1.8 | 0.9 | 1.1 |
| Force required to elongate by 100% (MPa | 5.2 | 4.7 | 2.8 | 2.6 | 2.8 | 4.5 | 1.7 | 2.5 |
| % Force change required to elongate by 100% (MPa | 48.57 | 80.77 | -9.68 | 0.00 | 33.33 | 66.67 | 6.25 | 4.17 |
| Force required to elongate by 300% (MPa) | - | - | - | 11.1 | 11.2 | - | 8.7 | 10.7 |
| Elongation at break (%) | 267 | 279 | 281 | 323 | 314 | 287 | 362 | 318 |
| Change in elongation at break (%) | -32.41 | -38.55 | 10.20 | 2.87 | -21.11 | -30.68 | -6.22 | -1.55 |
| Shore A hardness | 66.53 | 62.2 | 57.23 | 54.97 | 58.17 | 61.5 | 51.13 | 55.3 |
| Shore A hardness change (%) | 4.76 | 5.73 | 0.4 | 1.04 | 4.54 | 5.63 | 0.03 | 1.4 |
| Tear resistance (N/mm) | 3.3 | 2.5 | 3.4 | 3.2 | 2.6 | 2.3 | 3.5 | 4.4 |
| Tear resistance change (%) | -53.52 | -47.92 | -51.43 | -28.89 | -35.00 | -50.00 | 2.94 | 37.50 |

The table above indicates the performance of formulations 1 to 8 after aging in air at 100°C for 168 hours. As shown in the table above, aged properties of char containing rubber formulations (formulation numbers 2,4,6,8) were similar to N700 series carbon black formulations (formulation numbers 1 and 3), demonstrating that plastic pyrolysis char formed according to the methods described herein may be used in-place for an N700 series carbon black in a formulation which will be exposed to aging conditions. Furthermore, the properties of the char formulations cured with hydrogen peroxide (formulation numbers 4 and 8) are extremely stable after aging conditions, especially with regards to tensile strength, elongation at break and shore A hardness.

## Claims

1. A method for the production of a rubber or thermoplastic polymer composition, the method comprising:
providing an end-of-life-plastic feedstock;
pyrolysing the feedstock to produce a pyrolysis char; and
mixing the pyrolysis char into a rubber or thermoplastic polymer composition in an amount of from 0.5 to 60 wt%, based on the total weight of the mixture.

2. The method according to claim 1, wherein the end-of-life-plastic feedstock comprises hydrocarbon plastic, preferably in an amount of at least 80 wt%, more preferably at least 90 wt%, and/or wherein the end-of-life-plastic feedstock comprises hydrocarbon plastic wherein the hydrocarbon plastic is selected from the group consisting of polyethylene (PE), polystyrene (PS), polypropylene (PP), and mixtures thereof.

3. The method according to any preceding claim, wherein the feedstock is pyrolysed at a temperature of 350°C or more, preferably from 380°C to 430°C.

4. The method according to any preceding claim, wherein the pyrolysis char has:
(i) a carbon content of from 35 wt% to 60 wt%, preferably from 35 wt% to 50 wt%; and/or
(ii) an ash content of from 30 wt% to 60 wt%, preferably from 40 wt% to 50 wt%; and/or
(iii) a surface area of 20 m²/g or less, preferably 2 m²/g or less; and/or
(iv) a density of 1.25 g/cm³ or less, preferably from 0.9 to 1.2 g/cm³.

5. The method according to any preceding claim, wherein the rubber is an EPDM type rubber composition, and/or wherein the rubber is for use in a tyre composition.

6. The method according to any preceding claim, wherein the thermoplastic polymer is polypropylene or polyvinylchloride.

7. The method according to any preceding claim, wherein the pyrolysis char is mixed into the rubber or thermoplastic polymer composition in an amount of from 2 to 50wt%, preferably 5 to 40wt%.

8. The method according to any preceding claim, wherein the pyrolysis char is milled before mixing into the rubber or thermoplastic polymer composition, preferably jet milled or wet milled, and/or wherein the pyrolysis char has a mean primary particle size (D50) of less than 50 microns, preferably less than 10 microns, more preferably less than 5 microns.

9. The method according to any preceding claim, wherein the rubber or thermoplastic polymer composition:
(i) further comprises a bulking filler, preferably calcium carbonate; and/or
(ii) further comprises a reinforcing filler, preferably carbon black; and/or
(iii) is substantially devoid of any further filler materials;
preferably wherein the rubber or thermoplastic polymer composition comprises calcium carbonate and carbon black.

10. The method according to any preceding claim, wherein the method further comprises curing the mixture of the pyrolysis char and rubber/thermoplastic polymer composition with sulphur or peroxide.

11. A method for the manufacture of a rubber component, preferably a tyre, or a thermoplastic polymer component, the method comprising:
performing the method according to any preceding claim; and
shaping the rubber or thermoplastic polymer composition to form the component.

12. A rubber composition or thermoplastic polymer composition, preferably an EPDM rubber composition, obtainable by the method according to any of claims 1 to 11.

13. A composition comprising from 0.5 to 60 wt% of a char material and the balance a rubber or thermoplastic polymer material, wherein the char material is a pyrolysis char having a carbon content of from 35 wt% to 60 wt%, a surface area of 20 m²/g or less, and a density of 1.25 g/cm³ or less.

14. Use of a pyrolysis char obtained from the pyrolysis of end-of-life plastics comprising hydrocarbon plastic as a substitute for carbon black or for calcium carbonate in rubber compositions.

15. Use of pyrolysis char obtained from the pyrolysis of end-of-life plastics comprising hydrocarbon plastic to provide a lower or zero carbon footprint rubber composition.

## Patentansprüche

1. Verfahren zur Herstellung einer Gummi- oder thermoplastischen Polymerzusammensetzung, wobei das Verfahren umfasst:
Bereitstellen von Altkunststoff-Ausgangsmaterial;
Pyrolysieren des Ausgangsmaterials zur Herstellung von Pyrolysekohle; und
Mischen der Pyrolysekohle in eine Kautschuk- oder thermoplastische Polymerzusammensetzung in einer Menge von 0,5 bis 60 Gew.-%, bezogen auf das Gesamtgewicht der Mischung.

2. Verfahren nach Anspruch 1, bei dem das Altkunststoff-Ausgangsmaterial Kohlenwasserstoff-Kunststoff umfasst, vorzugsweise in einer Menge von mindestens 80 Gew.-%, noch bevorzugter von mindestens 90 Gew.-%, und/oder bei dem das Altkunststoff-Ausgangsmaterial Kohlenwasserstoff-Kunststoff umfasst, bei dem der Kohlenwasserstoff-Kunststoff ausgewählt ist aus der Gruppe bestehend aus Polyethylen (PE), Polystyrol (PS), Polypropylen (PP) und Gemischen davon.

3. Verfahren nach einem der vorhergehenden Ansprüche, bei dem das Ausgangsmaterial bei einer Temperatur von 350°C oder mehr, vorzugsweise von 380°C bis 430°C, pyrolysiert wird.

4. Verfahren nach einem der vorhergehenden Ansprüche, bei dem die Pyrolysekohle aufweist:
(i) einen Kohlenstoffgehalt von 35 Gew.-% bis 60 Gew.-%, vorzugsweise von 35 Gew.-% bis 50 Gew.-%; und/oder
(ii) einen Aschegehalt von 30 Gew.-% bis 60 Gew.-%, vorzugsweise von 40 Gew.-% bis 50 Gew.-%; und/oder
(iii) eine Oberfläche von 20 m²/g oder weniger, vorzugsweise 2 m²/g oder weniger; und/oder
(iv) eine Dichte von 1,25 g/cm³ oder weniger, vorzugsweise von 0,9 bis 1,2 g/cm³.

5. Verfahren nach einem der vorhergehenden Ansprüche, bei dem das Gummi eine Gummizusammensetzung vom EPDM-Typ ist, und/oder bei dem das Gummi zur Verwendung in einer Reifenzusammensetzung bestimmt ist.

6. Verfahren nach einem der vorangehenden Ansprüche, bei dem das thermoplastische Polymer Polypropylen oder Polyvinylchlorid ist.

7. Verfahren nach einem der vorhergehenden Ansprüche, bei dem die Pyrolysekohle der Gummi- oder thermoplastischen Polymerzusammensetzung in einer Menge von 2 bis 50 Gew.-%, vorzugsweise 5 bis 40 Gew.-%, beigemischt wird.

8. Verfahren nach einem der vorhergehenden Ansprüche, bei dem die Pyrolysekohle vor dem Beimischen zu der Gummi- oder thermoplastischen Polymerzusammensetzung gemahlen wird, vorzugsweise düsengemahlen oder nass gemahlen, und/oder bei dem die Pyrolysekohle eine mittlere Primärteilchengröße (D50) von weniger als 50 Mikron, vorzugsweise weniger als 10 Mikron, besonders bevorzugt weniger als 5 Mikron aufweist.

9. Verfahren nach einem der vorhergehenden Ansprüche, bei dem die Gummi- oder thermoplastische Polymerzusammensetzung:
(i) ferner einen volumengebenden Füllstoff, vorzugsweise Calciumcarbonat, enthält; und/oder
(ii) ferner einen verstärkenden Füllstoff, vorzugsweise Ruß, enthält; und/oder
(iii) im Wesentlichen frei von jeglichen weiteren Füllstoffen ist;
wobei die Gummi- oder thermoplastische Polymerzusammensetzung vorzugsweise Calciumcarbonat und Ruß enthält.

10. Verfahren nach einem der vorhergehenden Ansprüche, wobei das Verfahren ferner das Härten des Gemischs aus Pyrolysekohle und Gummi/thermoplastischer Polymerzusammensetzung mit Schwefel oder Peroxid umfasst.

11. Verfahren zur Herstellung eines Gummiteils, vorzugsweise eines Reifens, oder eines thermoplastischen Polymerteils, wobei das Verfahren umfasst:
Durchführen des Verfahrens nach einem der vorhergehenden Ansprüche; und
Formen der Kautschuk- oder thermoplastischen Polymerzusammensetzung, um das Bauteil zu bilden.

12. Gummizusammensetzung oder thermoplastische Polymerzusammensetzung, vorzugsweise EPDM-Gummizusammensetzung, erhältlich durch das Verfahren nach einem der Ansprüche 1 bis 11.

13. Zusammensetzung, umfassend 0,5 bis 60 Gew.-% eines Verkohlungsmaterials und als Rest ein Gummi- oder thermoplastisches Polymermaterial, wobei das Verkohlungsmaterial eine Pyrolysekohle mit einem Kohlenstoffgehalt von 35 Gew.-% bis 60 Gew.-%, einer Oberfläche von 20 m²/g oder weniger und einer Dichte von 1,25 g/cm³ oder weniger ist.

14. Verwendung von aus der Pyrolyse von Kohlenwasserstoff-Kunststoff enthaltenden Altkunststoffen gewonnener Pyrolysekohle als Ersatz für Ruß oder für Calciumcarbonat in Gummizusammensetzungen.

15. Verwendung von aus der Pyrolyse von Kohlenwasserstoff-Kunststoff enthaltenden Altkunststoffen gewonnener Pyrolysekohle, um eine Gummizusammensetzung mit verringertem oder ohne Kohlenstoff-Fußabdruck zu erhalten.

## Revendications

1. Procédé de production d'une composition de caoutchouc ou de polymère thermoplastique, le procédé comprenant les étapes consistant à :
fournir une matière première de plastique en fin de vie ;
pyrolyser la matière première pour produire un char de pyrolyse ; et
mélanger le char de pyrolyse dans une composition de caoutchouc ou de polymère thermoplastique selon une quantité de 0,5 à 60 % en poids sur la base du poids total du mélange.

2. Procédé selon la revendication 1, dans lequel la matière première de plastique en fin de vie comprend du plastique hydrocarboné, de préférence selon une quantité d'au moins 80 % en poids, plus préférablement d'au moins 90 % en poids, et/ou dans lequel la matière première de plastique en fin de vie comprend un plastique hydrocarboné, le plastique hydrocarboné étant choisi parmi le groupe constitué de polyéthylène (PE), polystyrène (PS), polypropylène (PP), et de mélanges ceux-ci.

3. Procédé selon l'une quelconque des revendications précédentes, dans lequel la matière première est pyrolysée à une température de 350°C ou plus, de préférence de 380°C à 430°C.

4. Procédé selon l'une quelconque des revendications précédentes, dans lequel le char de pyrolyse présente :
(i) une teneur en carbone de 35 % en poids à 60 % en poids, de préférence de 35 % en poids à 50 % en poids ; et/ou
(ii) une teneur en cendres de 30 % en poids à 60 % en poids, de préférence de 40 % en poids à 50 % en poids ; et/ou
(iii) une surface spécifique de 20 m²/g ou moins, de préférence de 2 m²/g ou moins ; et/ou
(iv) une densité de 1,25 g/cm³ ou moins, de préférence de 0,9 à 1,2 g/cm³.

5. Procédé selon l'une quelconque des revendications précédentes, dans lequel le caoutchouc est une composition de caoutchouc de type EPDM, et/ou dans lequel le caoutchouc est destiné à être utilisé dans une composition de pneumatique.

6. Procédé selon l'une quelconque des revendications précédentes, dans lequel le polymère thermoplastique est du polypropylène ou polychlorure de vinyle.

7. Procédé selon l'une quelconque des revendications précédentes, dans lequel le char de pyrolyse est mélangé dans la composition de caoutchouc ou de polymère thermoplastique selon une quantité de 2 à 50 % en poids, de préférence de 5 à 40 % en poids.

8. Procédé selon l'une quelconque des revendications précédentes, dans lequel le char de pyrolyse est broyé avant d'être mélangé dans la composition de caoutchouc ou de polymère thermoplastique, de préférence broyé au jet ou broyé en voie humide, et/ou dans lequel le char de pyrolyse a une taille moyenne de particule primaire (D50) inférieure à 50 microns, de préférence inférieure à 10 microns, plus préférablement inférieure à 5 microns.

9. Procédé selon l'une quelconque des revendications précédentes, dans lequel la composition de caoutchouc ou de polymère thermoplastique :
(i) comprend en outre une charge gonflante, de préférence du carbonate de calcium ; et/ou
(ii) comprend en outre une charge de renforcement, de préférence du noir de carbone ; et/ou
(iii) est sensiblement dépourvu de quelconques autres matériaux de charge ;
de préférence, dans lequel la composition de caoutchouc ou de polymère thermoplastique comprend du carbonate de calcium et du noir de carbone.

10. Procédé selon l'une quelconque des revendications précédentes, dans lequel le procédé comprend en outre le durcissement du mélange constitué du char de pyrolyse et de la composition de caoutchouc/polymère thermoplastique avec du soufre ou du peroxyde.

11. Procédé de fabrication d'un composant de caoutchouc, de préférence un pneumatique, ou d'un composant de polymère thermoplastique, le procédé comprenant :
la mise en oeuvre du procédé selon l'une quelconque des revendications précédentes ; et
le façonnage de la composition de caoutchouc ou de polymère thermoplastique pour former le composant.

12. Composition de caoutchouc ou composition de polymère thermoplastique, de préférence une composition de caoutchouc EPDM, pouvant être obtenue par le procédé selon l'une quelconque des revendications 1 à 11.

13. Composition comprenant de 0,5 à 60 % en poids d'un matériau de char et le reste étant un matériau de caoutchouc ou de polymère thermoplastique, dans laquelle le matériau de char est un char de pyrolyse ayant une teneur en carbone de 35 % en poids à 60 % en poids, une surface spécifique de 20 m²/g ou moins, et une densité de 1,25 g/cm³ ou moins.

14. Utilisation d'un char de pyrolyse obtenu par la pyrolyse de matières plastiques en fin de vie comprenant du plastique hydrocarboné comme substitut au noir de carbone ou au carbonate de calcium dans des compositions de caoutchouc.

15. Utilisation de char de pyrolyse obtenu par la pyrolyse de matières plastiques en fin de vie comprenant du plastique hydrocarboné pour fournir une composition de caoutchouc à empreinte carbone plus faible ou nulle.
